# EUROPÄISCHE PATENTSCHRIFT

(11) **EP 3 656 050 B1**
(45) Veröffentlichungstag und Bekanntmachung des Hinweises auf die Patenterteilung: **01.06.2022**
(21) Anmeldenummer: 18731447.1
(22) Anmeldetag: 14.06.2018
(51) Int. Cl.: H02P 23/00, H02P 25/22, H02P 27/08

(54) **ELEKTRISCHE MASCHINE**
ELECTRICAL MACHINE
MACHINE ELECTRIQUE

(30) Priorität: 21.07.2017 DE 102017212574
(43) Veröffentlichungstag der Anmeldung: 27.05.2020
(73) Patentinhaber: Robert Bosch GmbH, 70442 Stuttgart (DE)
(72) Erfinder: KURFISS, Jochen, 75417 Lomersheim (DE); VOLLMER, Ulrich, 73235 Weilheim (DE)
(86) Internationale Anmeldenummer: PCT/EP2018/065892
(87) Internationale Veröffentlichungsnummer: WO 2019/015894

(56) Entgegenhaltungen:
- DE-A1-102015 202 693
- US-A1- 2010 072 928

## Beschreibung

### Stand der Technik

Die Erfindung betrifft eine elektrische Maschine, insbesondere Elektromotor und/oder Generator. Die elektrische Maschine weist einen Stator und einen insbesondere permanentmagnetisch oder zum Bestromen ausgebildeten Rotor auf. Die Maschine weist wenigstens zwei Teilmaschinen auf. Die Teilmaschinen weisen jeweils dieselbe Phasenanzahl auf. Die Teilmaschinen weisen bevorzugt jeweils einen Teil von Statorspulen des Stators auf und sind jeweils ausgebildet, unabhängig voneinander ein magnetisches Drehfeld zum Drehbewegen des Rotors zu erzeugen. Die Maschine, insbesondere der Stator, weist für jede Phase einer Teilmaschine bevorzugt mindestens eine, mindestens zwei, mindestens drei oder nur eine Statorspule auf.

Aus der DE 10 2005 043 576 A1 ist ein Verfahren zum Betrieb einer elektrischen Maschine bekannt, die zumindest zwei elektrisch getrennte Statorwicklungen aufweist, wobei die erste Statorwicklung über einen ersten Teilumrichter gespeist wird und die zweite Statorwicklung über einen zweiten Teilumrichter gespeist wird. Die Teilumrichter werden mittels versetzt getakteter Signale gesteuert.

Aus der US 2010//0072928 A1 ist eine elektrische Maschine bekannt, die aus zwei Teilmaschinen besteht und deren Teilmaschinen mit einer mittenzentrierten PWM betrieben werden.

Aus der DE 10 2015 202 693 A1 ist ein Verfahren der Strommessung einer elektrischen Maschine bekannt, bei dem die Einschaltflanken zweier Schaltsignale zueinander verschoben werden um eine Strommessung zu ermöglichen.

### Offenbarung der Erfindung

Erfindungsgemäß weist die Maschine für jede Teilmaschine eine Leistungsendstufe auf. Die Maschine weist auch wenigstens eine Steuereinheit auf, welche mit den Leistungsendstufen verbunden ist. Die Steuereinheit ist ausgebildet, ein pulsweitenmoduliertes Signal zum Ansteuern der Leistungsendstufen zu erzeugen. Die Steuereinheit ist auch ausgebildet, das PWM-Signal für die Teilmaschinen derart zu erzeugen, dass eine jeweils einen Schaltzeitpunkt repräsentierende abfallende oder ansteigende Flanke eines PWM-Pulses für eine Teilmaschine, und eine Pulsmitte eines PWM-Pulses für eine weitere Teilmaschine der Teilmaschinen, zueinander zeitversetzt sind.

Es wurde nämlich erkannt, dass eine Stromerfassung eines Statorspulenstromes, welche in einer günstigen Weise zum Zeitpunkt einer Pulsmitte eines PWM-Pulses erfolgen kann, im Falle einer ansteigenden oder abfallenden Flanke eines PWM-Pulses, der zum Schalten einer Statorspule des Stators erzeugt wird, gestört werden kann. Die Statorspule, welche von der Leistungsendstufe mit einer Schaltflanke, gesteuert durch einen PWM-Puls, beaufschlagt wird, erzeugt elektromagnetische Felder, welche die Stromerfassung, insbesondere Strommessung, des Statorspulenstromes einer weiteren Statorspule stören kann. Die Störung kann insbesondere dann auftreten, wenn die zu den Teilmaschinen erzeugten Pulsmuster, zuvor auch PWM-Signal genannt, zueinander verschieden sind, oder die PWM-Ansteuerung der Teilmaschinen zueinander zeitlich versetzt erfolgt.

Erfindungsgemäß umfasst jede Teilmaschine einen Teil der Statorspulen des Stators und ist ausgebildet ein magnetisches Feld zum Drehbewegen des Rotors, insbesondere für einen vollen Rotorumlauf, zu erzeugen. Die Teilmaschinen sind bevorzugt jeweils mit demselben Zwischenkreis elektrisch verbunden und können aus demselben Zwischenkreis mit Energie versorgt werden. Die Steuereinheit ist bevorzugt ausgebildet, die Teilmaschinen zueinander phasenversetzt - bevorzugt durch Beaufschlagen der Leistungsendstufe mit einem PWM-Signal - anzusteuern. Dadurch kann ein mit dem Zwischenkreis verbundener Zwischenkreiskondensator vorteilhaft entlastet werden. Eine Phasenversatz zwischen Ansteuermustern der Teilmaschinen beträgt bevorzugt zwischen 20 und 30 Prozent einer PWM-Periode, besonders bevorzugt 25 Prozent einer PWM-Periode. Dadurch kann der Zwischenkreiskondensator die Teilmaschinen einander abwechselnd mit Strom versorgen.

Erfindungsgemäß weist die Maschine wenigstens einen mit der Steuereinheit verbundenen Stromsensor auf. Der Stromsensor ist ausgebildet, den Strom wenigstens einer Phase, oder aller Phasen der Teilmaschine zu erfassen. Die Steuereinheit ist ausgebildet, den Phasenstrom wenigstens einer Phase der Teilmaschine während einer Pulsmitte eines PWM-Pulses zu erfassen, wobei die Schaltzeitpunkte der PWM-Pulse zu der Pulsmitte, und so zum Erfassungszeitpunkt des Stromes zeitlich zueinander versetzt sind. Die Maschine weist bevorzugt für jede Teilmaschine wenigstens einen Stromsensor auf. Der Stromsensor kann beispielsweise als Shunt-Widerstand ausgebildet sein. Mittels des Stromsensors kann vorteilhaft der Phasenstrom einer Phase einer Teilmaschine erfasst werden, und ein den Phasenstrom repräsentierendes Stromsignal erzeugt werden. Die Steuereinheit ist bevorzugt mit dem Stromsensor eingangsseitig verbunden und kann das Stromsignal vorteilhaft als Steuerparameter oder Regeleingangsparameter zum Ansteuern der Leistungsendstufe durch die Steuereinheit empfangen.

In einer bevorzugten Ausführungsform ist die Steuereinheit ausgebildet, ein Tastverhältnis zwischen einer PWM-Pulsdauer und einer Pulspausendauer einer PWM-Periode für alle Phasen einer Teilmaschine insbesondere gleichmäßig zu ändern, und so einen Zeitversatz zwischen den Pulsflanken der Teilmaschine und der Pulsmitte der PWM-Pulse für die wenigstens eine weitere Teilmaschine zu erzeugen. Durch das gleichzeitige Ändern der Zeitdauer des PWM-Pulses für alle Statorspulen einer Teilmaschine wird ein Spannungs-Offset eines Spannungsvektors der Teilmaschine erzeugt, was jedoch vorteilhaft keinen Einfluss auf die Potenzialdifferenz der Phasen der Teilmaschinen untereinander hat.

In einer bevorzugten Ausführungsform ist die Steuereinheit ausgebildet, eine Pulsdauer des High-Side-Pulses, welcher von einem High-Side-Halbleiterschalter der Leistungsendstufe erzeugt wird, und eines Low-Side-Pulses, welcher von einem Low-Side-Halbleiterschalter derselben Leistungsendstufe erzeugt werden kann, zueinander abwechselnd zu ändern. So kann die zusätzlich durch die Pulsverlängerung entstehende Verlustleistung in der Leistungsendstufe insbesondere gleichmäßig zwischen den High-Side-Halbleiterschaltern und den Low-Side-Halbleiterschaltern aufgeteilt werden.

In einer bevorzugten Ausführungsform ist die Steuereinheit ausgebildet, das Tastverhältnis für eine Phase auf eine Obergrenze eines insbesondere unteren Aussteuerungsbereichs zu ändern. Vorteilhaft kann so bei einer Subtraktion eines vorbestimmten Zeitdauerbetrages von einer PWM-Pulsdauer eines PWM-Pulses ein negativer Spannungswert des resultierenden Spannungsvektors vermieden werden.

In einer bevorzugten Ausführungsform ist die Steuereinheit ausgebildet, ein Stromerfassungsintervall zu erzeugen, und den Strom während des Stromerfassungsintervalls zu erfassen. Die Steuereinheit ist bevorzugt weiter ausgebildet, das Tastverhältnis derart zu ändern, insbesondere zu vergrößern oder zu verkleinern, dass die insbesondere ansteigende oder abfallende Flanke mit dem Beginn oder einem Endzeitpunkt des Stromerfassungsintervalls zusammenfällt oder außerhalb des Stromerfassungsintervalls liegt. So kann die von der Steuereinheit mittels der PWM-Modulation zu erzeugende Betriebsspannung zum Betreiben der Leistungsendstufen vorteilhaft bis hin zu der Grenze des Stromerfassungsintervalls reichen, sodass eine Steuerung der auf die Leistungsendstufe, insbesondere eine Phase der Leistungsendstufe, zu beaufschlagenden Betriebsspannung vorteilhaft innerhalb eines Spannungsintervalls erfolgen kann, welches bis hin zu einem insbesondere nicht erlaubten Spannungsintervall reicht, welches durch ein Zeitfenster des Stromerfassungsintervalls bestimmt ist. Die von der Steuereinheit mittels der PWM-Modulation zu erzeugende Betriebsspannung zum Betreiben der Leistungsendstufen entspricht dabei einer durch ein Tastverhältnis der PWM-Modulation bestimmten Aussteuerung der Maschine.

In einer bevorzugten Ausführungsform weist die Steuereinheit einen Pulsweitenmodulator auf, welcher ausgebildet ist, das Tastverhältnis für wenigstens eine oder eine Mehrzahl von PWM-Perioden zu ändern. Die Steuereinheit kann so vorteilhaft mittels des Pulsweitenmodulators die auf eine Statorspule zu beaufschlagende Spannung mittels der Änderung des Tastverhältnisses einstellen.

Die Erfindung betrifft auch ein Verfahren zum Ansteuern einer elektrischen Maschine mit wenigstens zwei Teilmaschinen. Die Teilmaschinen weisen jeweils eine gleiche Anzahl von Statorspulen auf. Bei dem Verfahren werden zum Ansteuern der Statorspulen pulsweitenmodulierte Pulsmuster erzeugt, wobei ein durch wenigstens eine der Statorspulen fließender Strom im Zeitbereich einer Pulsmitte erfasst wird. Bei dem Verfahren wird ein Tastverhältnis einer Pulsperiode für wenigstens eine andere Teilmaschine derart geändert, insbesondere verlängert oder verkürzt, dass ein Pulsbeginn und/oder ein Pulsende eines PWM-Pulses zeitlich beabstandet zu der Stromerfassung, insbesondere zu der Pulsmitte erfolgt.

Erfindungsgemäß wird der Strom innerhalb eines Stromerfassungsintervalls erfasst, das den Zeitpunkt der Pulsmitte einschließt. Die Stromerfassung im Bereich der Pulsmitte kann vorteilhaft durch einen PWM-Takt bevorzugt mittenzentriert erzeugter PWM-Pulse, erzeugt durch den Pulsweitenmodulator, gesteuert werden. Beispielsweise kann die Stromerfassung in jeder PWM-Periode, jeder zweiten, dritten, oder vierten PWM-Periode, oder nur in mittelbar aufeinanderfolgenden PWM-Perioden, die eine vorbestimmte Anzahl von PWM-Perioden zwischeneinander einschließen, sodass in den eingeschlossenen PWM-Perioden keine Stromerfassung erfolgt. Bevorzugt beträgt ein Tastverhältnis bei der anderen Teilmaschine die Hälfte und somit 50 Prozent einer Vollaussteuerung, bei dem die PWM-Pulse für die andere Teilmaschine verlängert oder verkürzt werden. Bei diesem Aussteuerungswert fällt eine Pulsmitte eines Steuerpulses für die weitere Teilmaschine mit einer Pulsflanke eines Steuerpulses für die Teilmaschine zusammen. Bei einer Stromerfassung eines Stromes der weiteren Teilmaschine zu Zeitpunkt oder im Zeitbereich der Pulsmitte kann die Stromerfassung durch die Flanke des Steuerpulses der anderen Teilmaschine gestört werden. Ein Phasenversatz der PWM-Ansteuerung zwischen den zwei Teilmaschinen beträgt dazu beispielsweise 25 Prozent einer PWM-Periode.

Weiter bevorzugt beträgt ein zu vermeidender Bereich des Tastverhältnisses der Teilmaschine zwischen 50 und 60 Prozent, und/oder zwischen Null und 10 Prozent der Vollaussteuerung. Dadurch kann die Stromerfassung an der Teilmaschine vorteilhaft ungestört erfolgen. Bei einem anderem Phasenversatz der PWM-Ansteuerung zwischen der Teilmaschinen ergibt sich ein anderer zu vermeidender Bereich der Aussteuerung.

Ausführungsbeispiele werden anhand von Figuren beschrieben. Weitere vorteilhafte Ausführungsvarianten ergeben sich aus den in den abhängigen Ansprüchen und in den Figuren beschriebenen Merkmalen.
Figur 1 zeigt ein Ausführungsbeispiel für eine elektrische Maschine, welche ausgebildet ist, in Abhängigkeit eines Stromerfassens eines Antriebsstromes einer weiteren Teilmaschine eine Pulsdauer eines PWM-Pulses derart zu ändern, dass die Stromerfassung durch eine Schaltflanke des PWM-Pulses nicht gestört werden kann;
Figur 2 zeigt ein Diagramm, in dem Steuerpulse zum Ansteuern zwei zueinander verschiedener Teilmaschinen dargestellt sind;
Figur 3 zeigt ein Diagramm, in dem eine durch eine Pulsdauerverlängerung bewirkte Offsetverschiebung eines Spannungsverlaufes an einer Statorspule dargestellt ist;
Figur 4 zeigt Spannungsverläufe an drei Statorspulen einer Teilmaschine, bei denen in den Kurvenverläufen ein insbesondere mittlerer Aussteuerbereich übersprungen wird;
Figur 5 zeigt Spannungsverläufe an drei Statorspulen einer Teilmaschine, bei denen in den Kurvenverläufen zwei Aussteuerbereiche übersprungen werden.

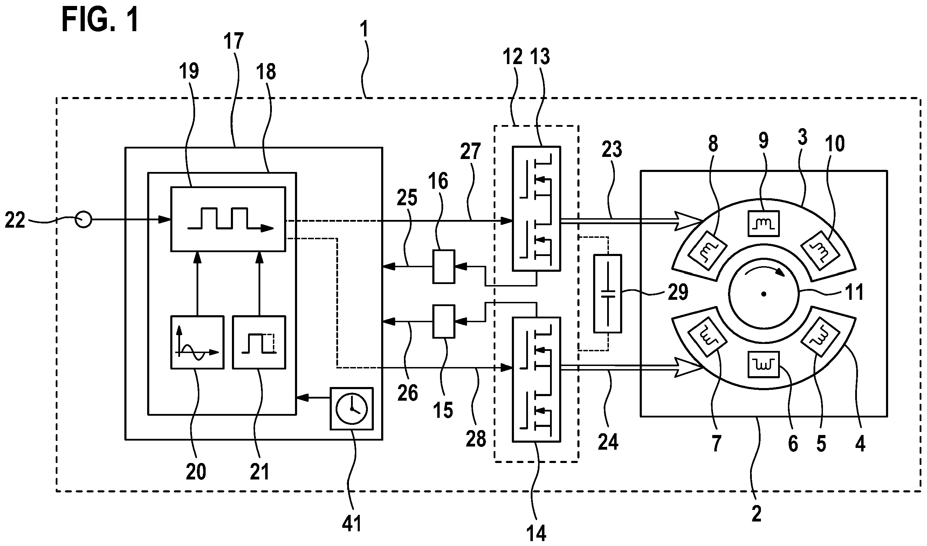

Figur 1 zeigt - schematisch - ein Ausführungsbeispiel für eine elektrische Maschine 1. Die elektrische Maschine 1 weist einen Stator 2 auf. Der Stator 2 umfasst in diesem Ausführungsbeispiel zwei Teilmaschinen, welche jeweils dreiphasig ausgebildet sind, und dazu drei Statorspulen aufweisen. Eine Teilmaschine 3 umfasst in diesem Ausführungsbeispiel die Statorspulen 8, 9 und 10. Eine weitere Teilmaschine 4 der Teilmaschinen weist die Statorspulen 5, 6 und 7 auf. Die Maschine 1 umfasst auch einen Rotor 11, welcher beispielsweise permanentmagnetisch ausgebildet ist. Die Maschine 1 weist auch eine Endstufe 12 auf, welche in diesem Ausführungsbeispiel aus zwei Teilendstufen 13 und 14 gebildet ist. Jede der Teilendstufen 13 und 14 weist jeweils eine B6-Brücke, oder drei H-Brücken auf. Eine H-Brücke umfasst zwei Halbleiterschalter-Halbbrücken, deren Ausgangsanschluss jeweils mit einem Anschluss einer Statorspule verbunden werden kann. Die Teilendstufe 13 ist ausgangsseitig über eine elektrische Verbindung 23 mit der Teilmaschine 3 verbunden. Die Teilendstufe 14 ist ausgangsseitig über eine elektrische Verbindung 24 mit der Teilmaschine 4 verbunden. Die Teilendstufe 13 ist ausgebildet, die Statorspulen 8, 9 und 10 zum Erzeugen eines magnetischen Drehfeldes zum Drehbewegen des Rotors 11 zu bestromen. Die Teilmaschine 14 ist ausgebildet, die Statorspulen 5, 6 und 7 zum Erzeugen eines magnetischen Drehfeldes zum Drehbewegen des Rotors 11 zu bestromen. Die Teilendstufen 13 und 14 können gemeinsam mit den jeweiligen Teilmaschinen 3 beziehungsweise 4 den Rotor 11 unabhängig zum Drehbewegen anregen. Auf diese Weise weist die Maschine 1 zwei voneinander unabhängige Teilmaschinen auf, welche im Normalbetrieb den Rotor 11 gemeinsam bewegen können, oder im Falle eines Defekts einer Teilmaschine kann die noch verbleibende Teilmaschine den Rotor 11 weiterbewegen.

Die Maschine 1 weist auch eine Steuereinheit 17 auf. Die Steuereinheit 17 ist ausgangsseitig über eine Verbindungsleitung 27 mit der Endstufe 12, und dort mit der Teilendstufe 13, verbunden und ist ausgebildet, die Teilmaschine 3 über die Verbindungsleitung 27 anzusteuern, und dazu ein Steuersignal, insbesondere ein Pulsmuster, zu erzeugen und dieses an die Teilendstufe 13 zu senden. Die Steuereinheit 17 ist ausgangsseitig über eine Verbindungsleitung 28 mit der Teilendstufe 14 verbunden und ist ausgebildet, die Teilendstufe 14, insbesondere Steueranschlüsse der Teilendstufe 14, zum Bestromen der Teilmaschine 4 anzusteuern. Die Maschine 1 weist auch einen Stromsensor 16 zum Erfassen eines Stromes der Teilendstufe 13, und einen Stromsensor 15 zum Erfassen eines Stromes der Teilendstufe 14 auf. Die Stromsensoren 15 und 16 sind beispielsweise durch einen Shunt-Widerstand gebildet. Die Teilendstufen 13 und 14 können - anders als in Figur 1 dargestellt - auch mittels eines gemeinsamen Stromsensors verbunden sein. Dazu kann eine Masseleitung der Teilendstufen 13 und 14 jeweils zusammengeführt sein und die zusammengeführte Masseleitung über den gemeinsamen Shunt-Widerstand zu einem Masseanschluss der Maschine 1 geführt sein.

Die Steuereinheit 17 ist in diesem Ausführungsbeispiel ausgebildet, die Teilmaschinen 3 und 4 zueinander phasenversetzt anzusteuern. So kann ein von den Teilendstufen 13 und 14 gemeinsam genutzter Zwischenkreiskondensator 29 entlastet werden. Der Stromsensor 16 ist ausgangsseitig über eine Verbindungsleitung 25 mit der Steuereinheit 17 verbunden. Der Stromsensor 15 ist ausgangsseitig über eine Verbindungsleitung 26 mit der Steuereinheit 17 verbunden. Die Stromsensoren 16 und 15 sind jeweils ausgebildet, einen in der jeweiligen Teilendstufe 13 beziehungsweise 14 fließenden Strom zu erfassen und ein den Strom repräsentierendes Stromsignal zu erzeuge und ausgangsseitig an die Steuereinheit 17 zu senden.

Die Steuereinheit 17 weist einen Pulsmustergenerator 18 auf. Der Pulsmustergenerator 18 ist ausgebildet, pulsweitenmodulierte Steuersignale zum Ansteuern der Leistungsendstufe 12, insbesondere Steueranschlüsse der Leistungsendstufe 12, zu erzeugen und diese ausgangsseitig auszugeben. Dazu weist der Pulsmustergenerator 18 einen Pulsweitenmodulator 19 auf. Der Pulsweitenmodulator 19 weist einen Eingang 22 auf und ist ausgebildet, in Abhängigkeit eines am Eingang 22 empfangenen Steuersignals, insbesondere Amplitudensignals, ein Tastverhältnis zwischen einer Pulsdauer und einer Pulspausendauer zu erzeugen und die Steuerpulse zum Ein- und Ausschalten der Halbleiterschalter der Leistungsendstufe 12 entsprechend dem Tastverhältnis zu erzeugen.

Der Pulsweitenmodulator 19, im Folgenden auch PWM-Modulator genannt, ist eingangsseitig mit einem Ansteuermustergenerator 20 verbunden. Der Ansteuermustergenerator ist in diesem Ausführungsbeispiel ausgebildet, für jede Phase, und so für jede der Phase entsprechenden Statorspule der Teilmaschinen ein Ansteuersignal zu erzeugen. Das Ansteuersignal repräsentiert beispielsweise eine Sinuswellenform oder zusätzlich eine zu der Sinuswellenform - als Grundschwingung - entsprechende Oberwelle, bevorzugt die dritte Oberwelle.

Die Steuereinheit 17 ist ausgebildet, das von den Stromsensoren 15 und 16 erzeugte Stromsignal wenigstens zu einem Stromerfassungszeitpunkt, oder innerhalb eines Stromerfassungsintervalls, zu erfassen, welches im zeitlichen Bereich oder zum Zeitpunkt einer Hälfte der Steuerpulsdauer eines Steuerpulses liegt. Die Steuereinheit 17 kann so den in der Leistungsendstufe, insbesondere in den Teilendstufen 13 und 14, fließenden Strom zum Zeitpunkt einer Pulsmitte der von dem PWM-Modulator 19 erzeugten Steuerpulse erfassen. Der PWM-Modulator 19 ist erfindungsgemäß ausgebildet, die Steuerpulse mittenzentriert innerhalb einer Pulsperiode zu erzeugen. Die Stromerfassung erfolgt erfindungsgemäß mittenzentriert bezogen auf die Steuerpulserzeugung. Die Steuereinheit 17, insbesondere der PWM-Modulator 19, ist ausgebildet, die Teilmaschinen 3 und 4 zueinander phasenversetzt anzusteuern. Ein Phasenversatz zwischen den Pulsmustern für die Teilmaschinen 3 und 4 beträgt beispielsweise 25 Prozent einer Pulsperiodendauer. Die Steuereinheit 17 ist ausgebildet, im Falle einer Schaltflanke eines Steuerpulses für eine Teilmaschine, wobei der Schaltzeitpunkt der Schaltflanke in ein Stromerfassungsintervall einer Stromerfassung der weiteren oder derselben Teilmaschine fällt, die Steuerpulsdauer der Steuerpulse für die Teilmaschine wenigstens für die Dauer der Stromerfassung des Antriebsstromes wenigstens für einen Periodentakt oder mehrere Periodentakte zu verändern, insbesondere zu verlängern oder zu verkürzen.

Die Steuereinheit 17, in diesem Ausführungsbeispiel der Pulsmustergenerator 18, weist dazu eine Addiereinheit 21 auf, welche ausgebildet ist, in Abhängigkeit eines Zusammentreffens einer Schaltflanke innerhalb des Stromerfassungsintervalls, die Steuerpulsdauer der Steuerpulse für die Teilmaschine zu verlängern und dazu einen verlängerten Steuerpuls derart zu erzeugen, dass die Schaltflanke außerhalb des Stromerfassungsintervalls liegt. Der Pulsmustergenerator 18 ist eingangsseitig mit einem Zeitgeber 41 verbunden und ausgebildet, ein von dem Zeitgeber 41 erzeugtes, einen Zeittakt repräsentierendes Zeittaktsignal zu empfangen, und das PWM-Signal in Abhängigkeit des Zeittaktsignals zu erzeugen. Der Zeitgeber 41 ist beispielsweise durch einen Schwingquarz gebildet.

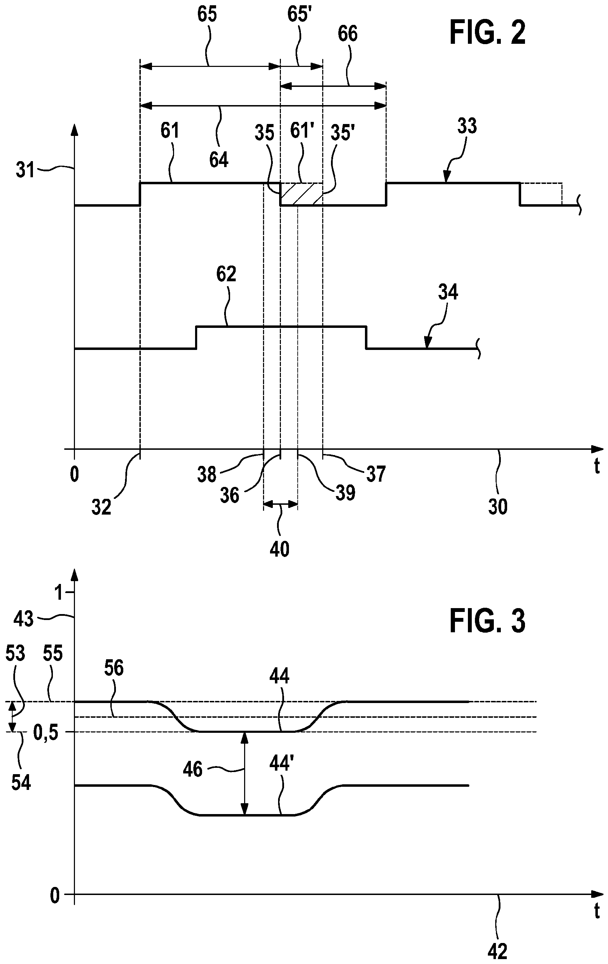

Figur 2 zeigt ein Diagramm, in dem - schematisch - zwei zueinander verschiedene Pulsmustersignale für zwei zueinander verschiedene Statorspulen zueinander verschiedener Teilmaschinen dargestellt sind. Das Diagramm umfasst eine Zeitachse 30 und eine Amplitudenachse 31. Die Kurve 33 repräsentiert ein pulsweitenmoduliertes Steuersignal zum Ansteuern der Teilendstufe 13, was beispielsweise ein Bestromen der Statorspule 8 der Teilmaschine 3 bewirkt.

Das Pulsmustersignal, repräsentiert durch die Kurve 33, weist einen Steuerpuls 61 auf, welcher zu einem Zeitpunkt 32 beginnt und zu einem späteren Zeitpunkt 36 endet. Der Steuerpuls 61 weist eine zwischen dem Zeitpunkt 32 des Beginns und einem Zeitpunkt des Endes 36 sich erstreckende Steuerpulsdauer 65 auf. An den Steuerpuls 61 schließt eine Pulspause mit einer Pulspausendauer 66 an. Eine Periodendauer , zwei, dri einer PWM-Periode des Steuerpulses 61 umfasst somit die Steuerpulsdauer 65 und die Pulspausendauer 66. Das Verhältnis zwischen der Steuerpulsdauer 65 und der Pulspausendauer 66 bestimmt das Tastverhältnis der PWM-Modulation.

Der Steuerpuls 61 weist an seinem Ende eine abfallende Flanke 35 auf. Figur 2 zeigt auch ein pulsweitenmoduliertes Steuersignal, repräsentiert durch eine Kurve 34, das einen Steuerpuls 62 umfasst. Der Steuerpuls 62 weist zum Zeitpunkt 36 seine Pulsmitte auf. Mittels des Steuerpulses 62, und so mittels des pulsweitenmodulierten Steuersignals, repräsentiert durch die Kurve 34, wird die Teilendstufe 14 angesteuert, und so eine Statorspule der weiteren Teilmaschine 4, beispielsweise die Statorspule 5 in Figur 1, bestromt. Figur 2 zeigt auch ein Stromerfassungsintervall 40, welches den Zeitpunkt 36 umfasst, sodass die Pulsmitte des Steuerpulses 62 innerhalb des Stromerfassungsintervalls 40 liegt. Die zuvor beschriebene Schaltflanke 35 des Steuersignals, repräsentiert durch die Kurve 33, liegt in diesem Ausführungsbeispiel - bedingt durch die Phasenverschiebung der Steuersignale der in Figur 1 dargestellten Teilmaschinen 3 und 4 - im Stromerfassungsintervall 40, und kann die Stromerfassung durch den Stromsensor 15, und insbesondere das vom Stromsensor 15 erzeugte Stromsignal, während des Stromerfassens stören. Figur 2 zeigt auch einen zeitlich verlängerten Steuerpuls 61', welcher eine abfallende Flanke 35' aufweist, deren Zeitpunkt 37 außerhalb des Stromerfassungsintervalls 40 - in diesem Ausführungsbeispiel später - liegt. Der zeitlich verlängerte Steuerpuls 61' weist die verlängerte Steuerpulsdauer 65' auf. Das Stromerfassungsintervall 40 weist eine Untergrenze 38 und eine Obergrenze 39 auf. Zwischen der Untergrenze 38 und der Obergrenze 39 liegt somit ein Aussteuerungsbereich der Pulsweitenmodulation für den Steuerpuls 61, welcher wenigstens zum Zeitpunkt eines Stromerfassens eines Stromes der weiteren Teilmaschine beim Steuerpulserzeugen des Steuerpulses 61 - beispielsweise durch den in Figur 1 dargestellten Pulsweitenmodulator 19 - vermieden werden soll.

Durch die Addiereinheit 21, welche ausgebildet ist, ein Tastverhältnis zum Erzeugen des Steuerpulses 61 derart zu erzeugen, dass eine ansteigende oder eine abfallende Flanke 35 außerhalb des Stromerfassungsintervalls 40 liegt, sind die innerhalb des Stromerfassungsintervalls 40 liegenden Tastverhältnisse, und so den Tastverhältnissen entsprechende Spannungswerte, die sich beim Bestromen der entsprechenden Statorspule einstellen, für die entsprechende Statorspule gesperrt.

Figur 3 zeigt - schematisch - ein Diagramm mit einer Abszisse 42, die einen Zeitverlauf repräsentiert und einer Ordinate, 43, die eine Signalamplitude repräsentiert. Figur 3 zeigt einen beispielhaften, jeweils über eine PWM-Periode insbesondere kurzzeitig gemittelten Spannungsverlauf an einer Statorspule, welcher durch das pulsweitenmodulierte Signal, repräsentiert durch die Kurve 33, erzeugt ist. Der Spannungsverlauf, repräsentiert durch die Kurve 44, liegt innerhalb eines Aussteuerungsintervalls 53, welches eine Obergrenze 55, eine Untergrenze 54 und einen Mittelwert 56 aufweist. Sämtliche zum Erzeugen des Spannungsverlaufes 44 erforderlichen Steuerpulse, wie der in Figur 2 dargestellte Steuerpuls 61, fallen dabei mit der jeweiligen abfallenden Flanke, wie die in Figur 2 dargestellte abfallende Flanke 35, in das Stromerfassungsintervall 40, welches in Figur 3 dem Aussteuerungsintervall 53 entspricht. Das Aussteuerungsintervall 53 bestimmt dabei einen bei einer Aussteuerung der Maschine zu vermeidenden Aussteuerungsbereich.

Der in Figur 2 dargestellte verlängerte Steuerpuls 35' bewirkt nun eine Offset-Verschiebung 46 eines Offsets des Spannungsverlaufes, repräsentiert durch die Kurve 44. Figur 3 zeigt auch eine Kurve 44', welche die um die Offset-Verschiebung 46 aus dem Amplitudenbereich 53 herausgeschobene Kurve 44, und so einen aus dem Aussteuerungsbereich 53 herausgeschobenen Spannungsverlauf repräsentiert. Zu der Offset-Verschiebung 46 werden die Steuerpulse zum Ansteuern der Halbleiterschalter für eine Teilmaschine, insbesondere für sämtliche Statorspulen der Teilmaschine, gleichzeitig verlängert, oder verkürzt.

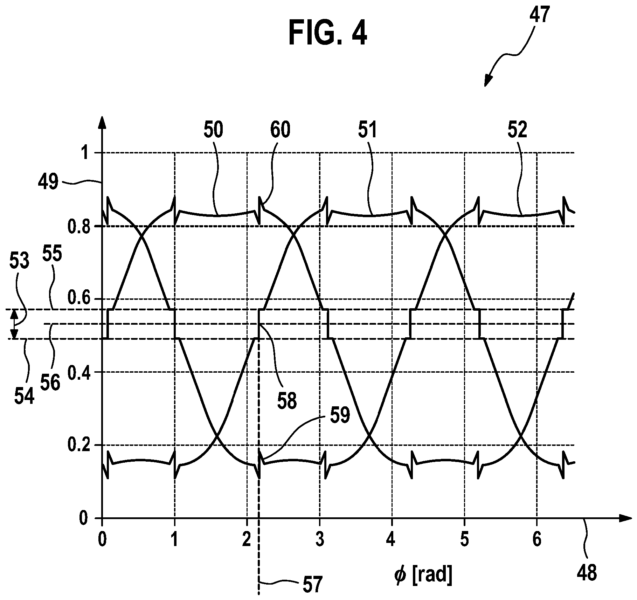

Figur 4 zeigt - schematisch - ein Diagramm, in welchem eine Kurve 50, eine Kurve 51 und eine Kurve 52 dargestellt sind. Das Diagramm weist eine Zeitachse 48 und eine Amplitudenachse 49 auf. Die Kurven 50, 51 und 52 repräsentieren jeweils einen Spannungsverlauf an zueinander verschiedenen Statorspulen einer Teilmaschine, beispielsweise den drei Statorspulen 8, 9 und 10 der Teilmaschine 3 in Figur 1, welcher beim Bestromen der Statorspulen 8, 9 und 10 durch die Teilendstufe 13 erzeugt werden kann.

Die Kurve 50 entspricht dabei beispielsweise dem Spannungsverlauf an der Statorspule 8, die Kurve 51 dem Spannungsverlauf an der Statorspule 9 und die Kurve 52 dem Spannungsverlauf an der Statorspule 10 in Figur 1. Figur 4 zeigt auch den Aussteuerungsbereich 53, den Mittelwert 56, die Untergrenze 54 und die Obergrenze 55 des Aussteuerungsbereichs 53.

Figur 4 zeigt auch einen Messzeitpunkt 57, zu dem ein Strom einer weiteren Teilmaschine, beispielsweise der Teilmaschine 4 in Figur 1, erfasst wird. Der Pulsweitenmodulator 18 in Figur 1 ist beispielsweise ausgebildet, die Steuerpulse, welche ein Bestromen der Statorspule 9 bewirken und welches an der Statorspule 9 den Spannungsverlauf repräsentiert durch die Kurve 51 erzeugt, im Spannungsbereich des Aussteuerungsbereiches 53 in einem Intervall zwischen dem Mittelwert 56 und der Untergrenze 54 derart zu verkleinern, dass die Steuerpulsdauer der Steuerpulse außerhalb des Stromerfassungsintervalls, und so eine an der Statorspule 9 erzeugte Spannung maximal an der Untergrenze 54 des Aussteuerungsbereichs 53 - bis hin zum Zeitpunkt 57 - verläuft. Der Zeitpunkt 57 entspricht dabei dem Mittelwert 56 eines unveränderten Spannungsverlaufs im Aussteuerungsbereich 53. Die Steuerpulse, welche dem Aussteuerungsbereich zwischen dem Mittelwert 56 und der Obergrenze 55 entsprechen, können durch den Pulsweitenmodulator 18 entsprechend verlängert werden, sodass die abfallenden Flanken, wie die abfallende Flanke 35' in Figur 2, außerhalb des Stromerfassungsintervalls 40 liegen. Die Aussteuerungswerte, die zwischen dem Mittelwert 56 und der Obergrenze 55 liegen, werden so wenigstens im Stromerfassungsintervall 40 an die Obergrenze 55 verschoben. Figur 4 zeigt auch das gleichzeitige Ändern der Steuerpulsdauer für die drei Statorspulen 8, 9 und 10 derselben Teilmaschine 3.

Der Spannungsverlauf an der Statorspule 9, repräsentiert durch die Kurve 50, weist zum Zeitpunkt 57 einen der Verkürzung beziehungsweise Verlängerung der Steuerpulsdauer entsprechenden Amplitudenverlauf 60 auf. Die Kurve 52, welche den Spannungsverlauf an der Statorspule 10 repräsentiert, weist im Bereich des Zeitpunktes 57 einen entsprechenden Amplitudenverlauf 59 auf, welcher durch die Änderung der Steuerpulsdauer verursacht ist. Der Spannungsverlauf an der Statorspule 9, repräsentiert durch die Kurve 51, weist im Bereich des Stromerfassungszeitpunkts 57 einen sprungförmigen Verlauf 58 auf.

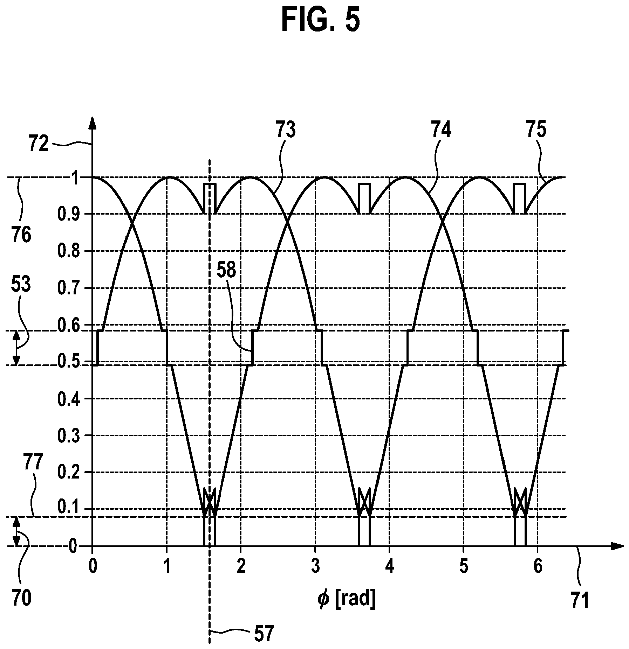

Figur 5 zeigt - schematisch - ein Diagramm, in welchem jeweils einen Spannungsverlauf repräsentierende Kurven 73, 74 und 75 dargestellt sind. Das Diagramm weist eine Zeitachse 71 und eine Amplitudenachse 72 auf. Die Kurven 73, 74 und 75 repräsentieren in diesem Ausführungsbeispiel eine Vollaussteuerung der in Figur 1 dargestellten Teilmaschine 3. Das Diagramm in Figur 5 zeigt auch einen weiteren Aussteuerungsbereich 70, welcher sich zwischen einem kleinstmöglichen Aussteuerungswert, in diesem Ausführungsbeispiel einem Null-Wert des Aussteuerungsbereiches, und einem Aussteuerungswert kleiner als einem maximalen Aussteuerungswert 76 erstreckt, wobei der maximale Aussteuerungswert 76 der Vollaussteuerung der Teilmaschine entspricht. Der zuvor erwähnte kleinere Wert entspricht dabei einer Obergrenze 77 des zuvor erwähnten Aussteuerungsbereichs 70. Der Aussteuerungsbereich 70 wird in diesem Ausführungsbeispiel durch sehr kurze Steuerpulse zum Bestromen der Teilmaschine 3 selbst verursacht.

Der Pulsweitenmodulator 18 ist in diesem Ausführungsbeispiel ausgebildet, die Steuerpulsdauer von Steuerpulsen, welche in den Aussteuerungsbereich 70, im Folgenden auch unterer Aussteuerungsbereich genannt, fallen, derart zu verlängern, dass die verlängerten Steuerpulse eine Steuerpulsdauer aufweisen, welche der Obergrenze 77 des Aussteuerungsbereichs 70 entspricht. Ein Messzeitpunkt 57 zum Stromerfassen eines Stromes an derselben Teilmaschine 3 in Figur 1, kann durch die Verlängerung der Steuerpulse für die Teilmaschine 3 so auch zu einem der Obergrenze 77 entsprechenden Zeitpunkt stattfinden, an dem die Spannungsverläufe, repräsentiert durch die Kurven 73 und 74, jeweils in den unteren Bereich 70 eintauchen würden. Die vorgenannten Spannungsverläufe, welche in dem unteren Bereich 70 oder in dem zuvor erwähnten Aussteuerungsbereich 53 liegen, werden durch das Ansteuermuster, erzeugt durch den Ansteuermustergenerator 20, vorgegeben. Die Spannungsverläufe, repräsentiert durch die Kurven 73, 74 und 75, weichen so, verursacht durch die verkürzten beziehungsweise verlängerten Steuerpulse, von der durch den Ansteuermustergenerator vorgegebenen Signalform ab. Die so verursachte Abweichung ist jedoch vorteilhaft sehr klein, da vorteilhaft eine Pulsmodulationsfrequenz, welche eine Pulsperiodendauer der Pulsweitenmodulation bestimmt, hinreichend groß gewählt ist, sodass die Änderung der Steuerpulsdauer entsprechend fein gestuft erfolgen kann. Weiter vorteilhaft beträgt der Aussteuerungsbereich 53, oder zusätzlich der untere Aussteuerungsbereich 70 jeweils weniger als ein Zehntel der Vollaussteuerung der Maschine, repräsentiert durch den maximalen Aussteuerungswert 76.

## Patentansprüche

1. Elektrische Maschine (1) mit einem Stator (2) und einem Rotor (11), wobei die Maschine wenigstens zwei jeweils dieselbe Phasenanzahl aufweisende Teilmaschinen (3, 4) aufweist, wobei jede Teilmaschine (3, 4) einen Teil der Statorspulen des Stators (2) umfasst und ausgebildet ist, ein magnetisches Feld zum Drehbewegen des Rotors (11) zu erzeugen, wobei
die Maschine (1) für jede Teilmaschine (3, 4) eine Leistungsendstufe (13, 14) aufweist, und die Maschine (1) wenigstens eine Steuereinheit (17) aufweist, welche mit den Leistungsendstufen (13, 14) verbunden ist, und welche ausgebildet ist, ein PWM-Signal (33, 34) zum Ansteuern der Leistungsendstufen (13, 14) zu erzeugen, und die Steuereinheit (17) ausgebildet ist, das PWM-Signal (33, 34) für die Teilmaschinen (3, 4) derart zu erzeugen, dass eine jeweils einen Schaltzeitpunkt repräsentierende abfallende oder ansteigende Flanke (35) eines PWM-Pulses (61) für eine Teilmaschine (3) und eine Pulsmitte (36) eines PWM-Pulses (62) für eine weitere Teilmaschine (4) der Teilmaschinen (3, 4) zueinander zeitversetzt sind, und
die Maschine (1) dazu eingerichtet ist, PWM-Steuerpulse mittenzentriert zu erzeugen und die Teilmaschinen (3, 4) zueinander phasenversetzt anzusteuern,
**dadurch gekennzeichnet, dass**
die Maschine (1) wenigstens einen mit der Steuereinheit (17) verbundenen Stromsensor (15, 16) aufweist, welcher ausgebildet ist, den Phasenstrom wenigstens einer Phase oder aller Phasen der Teilmaschine (3, 4) zu erfassen, wobei die Steuereinheit (17) ausgebildet ist, den Phasenstrom wenigstens einer Phase der Teilmaschine (3, 4) während einer Pulsmitte (36) eines PWM-Pulses (62) zu erfassen, wobei die Schaltzeitpunkte der PWM-Pulse (61) zu der Pulsmitte (36) und so zum Erfassungszeitpunkt (36) des Stromes (40) zeitlich zueinander versetzt sind

2. Elektrische Maschine (1) nach einem der Ansprüche 1,
**dadurch gekennzeichnet, dass**
die Steuereinheit (17) ausgebildet ist, ein Tastverhältnis zwischen einer PWM-Pulsdauer (65) und einer Pulspausendauer (66) einer PWM-Periode (64) für alle Phasen einer Teilmaschine (3, 4) insbesondere gleichmäßig zu ändern und so einen Zeitversatz zwischen den Pulsflanken (35, 35') der Teilmaschine (3) und der Pulsmitte (36) der PWM-Pulse (62) für die wenigstens eine weitere Teilmaschine (4) zu erzeugen.

3. Elektrische Maschine (1) nach einem der vorhergehenden Ansprüche,
**dadurch gekennzeichnet, dass**
die Steuereinheit (17) ausgebildet ist, eine Pulsdauer (65, 65') eines High-Side-Pulses und eines Low-side-Pulses zueinander abwechselnd zu ändern.

4. Elektrische Maschine (1) nach einem der vorhergehenden Ansprüche,
**dadurch gekennzeichnet, dass**
die Steuereinheit (17) ausgebildet ist, das Tastverhältnis für eine Phase auf eine Obergrenze (77) eines insbesondere unteren Aussteuerungsbereichs (70) zu ändern.

5. Elektrische Maschine (1) nach einem der vorhergehenden Ansprüche,
**dadurch gekennzeichnet, dass**
die Steuereinheit (17) ausgebildet ist, ein Stromerfassungsintervall (40) zu erzeugen und den Strom während des Stromerfassungsintervalls (40) zu erfassen, und das Tastverhältnis (65, 66) derart zu ändern, insbesondere zu vergrößern oder zu verkleinern, dass die insbesondere ansteigende oder abfallende Flanke (35) mit einem Beginn (38) oder einem Endzeitpunkt (39) des Stromerfassungsintervalls (40) zusammenfällt oder außerhalb des Stromerfassungsintervalls liegt.

6. Elektrische Maschine (1) nach einem der vorhergehenden Ansprüche,
**dadurch gekennzeichnet, dass**
die Steuereinheit (17) einen Pulsweitenmodulator (18) aufweist, welcher ausgebildet ist, das Tastverhältnis (65, 66) für wenigstens eine oder eine Mehrzahl von PWM-Perioden (64) zu ändern.

7. Verfahren zum Ansteuern einer elektrischen Maschine (1) mit wenigstens zwei Teilmaschinen (3, 4), wobei die Teilmaschinen jeweils eine gleiche Anzahl von Statorspulen (5, 6, 7, 8, 9, 10) aufweist und wobei jede Teilmaschine (3, 4) einen Teil der Statorspulen des Stators (2) umfasst und ausgebildet ist, ein magnetisches Feld zum Drehbewegen des Rotors (11) zu erzeugen, wobei zum Ansteuern der Statorspulen (5, 6, 7, 8, 9, 10) pulsweitenmodulierte Pulsmuster (33, 34) mittenzentriert erzeugt werden, wobei die Teilmaschinen phasenversetzt angesteuert werden, **dadurch gekennzeichnet, dass** ein durch wenigstens eine der Statorspulen (5, 6, 7, 8, 9, 10) fließender Strom im Zeitbereich (40) einer Pulsmitte (36) erfasst wird und wobei ein Tastverhältnis (65, 66) einer PWM-Periode (64) für wenigstens eine andere Teilmaschine (3) derart geändert, insbesondere verlängert oder verkürzt wird, dass ein Pulsbeginn und/oder ein Pulsende eines PWM-Pulses (61) zeitlich versetzt zu der Stromerfassung, insbesondere zu der Pulsmitte (36) erfolgt, wobei bei dem Verfahren der Strom innerhalb eines Stromerfassungsintervalls (40) erfasst wird, das den Zeitpunkt der Pulsmitte (36) einschließt.

8. Verfahren nach Anspruch 7, bei dem ein Tastverhältnis (65, 66) bei der anderen Teilmaschine (4) die Hälfte einer Vollaussteuerung der Maschine beträgt.

## Claims

1. Electric machine (1) with a stator (2) and a rotor (11), wherein the machine has at least two sub-machines (3, 4) each having the same number of phases, wherein each sub-machine (3, 4) comprises a portion of the stator coils of the stator (2) and is configured to create a magnetic field for rotating the rotor (11), wherein, for each sub-machine (3, 4), the machine (1) has a power output stage (13, 14), and the machine (1) has at least one control unit (17) which is connected to the power output stages (13, 14), and which is configured to generate a PWM signal (33, 34) for driving the power output stages (13, 14), and the control unit (17) is configured to generate the PWM signal (33, 34) for the sub-machines (3, 4) in such a way that a falling or rising edge (35), each representing a switching time, of a PWM pulse (61) for one sub-machine (3) and a pulse centre (36) of a PWM pulse (62) for another sub-machine (4) of the sub-machines (3, 4) are offset in time with respect to one another, and the machine (1) is configured to create centred PWM control pulses and to control the sub-machines (3, 4) in a manner offset in phase with respect to one another, **characterized in that** the machine (1) has at least one current sensor (15, 16) connected to the control unit (17), which sensor is configured to measure the phase current of at least one phase or of all phases of the sub-machine (3, 4), wherein the control unit (17) is configured to measure the phase current of at least one phase of the sub-machine (3, 4) during a pulse centre (36) of a PWM pulse (62), wherein the switching times of the PWM pulses (61) are offset with respect to one another in time with respect to the pulse centre (36) and thus with respect to the time of measurement (36) of the current (40).

2. Electric machine (1) according to Claim 1, **characterized in that** the control unit (17) is configured to change, in particular uniformly, a duty cycle between a PWM pulse duration (65) and a pulse pause duration (66) of a PWM period (64) for all phases of a sub-machine (3, 4) and thus to create a time offset between the pulse edges (35, 35') of the sub-machine (3) and the pulse centre (36) of the PWM pulses (62) for the at least one additional sub-machine (4).

3. Electric machine (1) according to one of the preceding claims, **characterized in that** the control unit (17) is configured to change a pulse duration (65, 65') of a high-side pulse and of a low-side pulse in alternation with respect to one another.

4. Electric machine (1) according to one of the preceding claims, **characterized in that** the control unit (17) is configured to change the duty cycle for a phase to an upper limit (77) of an in particular lower control range (70).

5. Electric machine (1) according to one of the preceding claims, **characterized in that** the control unit (17) is configured to create a current measurement interval (40) and to measure the current during the current measurement interval (40), and to change, in particular to increase or decrease, the duty cycle (65, 66) in such a way that the in particular rising or falling edge (35) coincides with a start (38) or an end time (39) of the current measurement interval (40) or is outside of the current measurement interval.

6. Electric machine (1) according to one of the preceding claims, **characterized in that** the control unit (17) has a pulse width modulator (18) which is configured to change the duty cycle (65, 66) for at least one or a plurality of PWM periods (64).

7. Method for controlling an electric machine (1) with at least two sub-machines (3, 4), wherein each of the sub-machines has the same number of stator coils (5, 6, 7, 8, 9, 10) and wherein each sub-machine (3, 4) comprises a portion of the stator coils of the stator (2) and is configured to create a magnetic field for rotating the rotor (11), wherein, for controlling the stator coils (5, 6, 7, 8, 9, 10) pulse-width-modulated pulse patterns (33, 34) are created so as to be centred, wherein the sub-machines are controlled in a manner offset in phase, **characterized in that** a current flowing through at least one of the stator coils (5, 6, 7, 8, 9, 10) in the time range (40) of a pulse centre (36) is measured and wherein a duty cycle (65, 66) of a PWM period (64) for at least one other sub-machine (3) is changed, in particular lengthened or shortened, in such a way that a pulse start and/or a pulse end of a PWM pulse (61) occurs offset in time with respect to the current measurement, in particular to the pulse centre (36), wherein, in the method, the current is measured within a current measurement interval (40) which includes the time of the pulse centre (36).

8. Method according to Claim 7, wherein a duty cycle (65, 66) in the other sub-machine (4) is half of a full scale of the machine.

## Revendications

1. Machine électrique (1) comprenant un stator (2) et un rotor (11), la machine comportant au moins deux sous-machines (3, 4) munies chacune du même nombre de phases, chaque sous-machine (3, 4) comprenant une partie des bobines du stator (2) et étant conçue pour générer un champ magnétique destiné à faire tourner le rotor (11),
la machine (1) comportant un étage de sortie de puissance (13, 14) pour chaque sous-machine (3, 4), et la machine (1) comportant au moins une unité de commande (17) qui est reliée aux étages de sortie de puissance (13, 14), et qui est conçue pour générer un signal PWM (33, 34) destiné à commander les étages de sortie de puissance (13, 14), et l'unité de commande (17) étant conçue pour générer le signal PWM (33, 34) destiné aux sous-machines (3, 4) de manière à ce qu'un front descendant ou montant (35), chacun représentant un instant de commutation, d'une impulsion PWM (61) destinée à une sous-machine (3) et un centre d'impulsion (36) d'une impulsion PWM (62) destinée à une autre sous-machine (4) des sous-machines (3, 4) étant décalés dans le temps l'un par rapport à l'autre, et la machine (1) étant conçue de manière centrée pour générer des impulsions de commande PWM et commander les sous-machines (3, 4) de manière déphasée l'une par rapport à l'autre,
**caractérisée en ce que**
la machine (1) comporte au moins un capteur de courant (15, 16) qui est relié à l'unité de commande (17) et qui est conçu pour détecter le courant de phase d'au moins une phase ou de toutes les phases de la sous-machine (3, 4), l'unité de commande (17) étant conçue pour détecter le courant de phase d'au moins une phase de la sous-machine (3, 4) pendant un centre d'impulsion (36) d'une impulsion PWM (62), les instants de commutation des impulsions PWM (61) étant décalés les uns des autres dans le temps par rapport au centre d'impulsion (36) et donc à l'instant de détection (36) du courant (40).

2. Machine électrique (1) selon l'une des revendications 1, **caractérisée en ce que** l'unité de commande (17) est conçue pour modifier un rapport cyclique entre une durée d'impulsion PWM (65) et une durée de pause d'impulsion (66) d'une période PWM (64) pour toutes les phases d'une sous-machine (3, 4), en particulier de manière uniforme, et donc pour générer un décalage temporel entre les fronts d'impulsion (35, 35') de la sous-machine (3) et le centre d'impulsion (36) des impulsions PWM (62) pour au moins une autre sous-machine (4).

3. Machine électrique (1) selon l'une des revendications précédentes,
**caractérisée en ce que**
l'unité de commande (17) est conçue pour modifier alternativement une durée d'impulsion (65, 65') d'une impulsion côté haut et d'une impulsion côté bas l'une par rapport à l'autre.

4. Machine électrique (1) selon l'une des revendications précédentes,
**caractérisée en ce que**
l'unité de commande (17) est conçue pour modifier le rapport cyclique d'une phase à une limite supérieure (77) d'une plage de commande (70) en particulier inférieure.

5. Machine électrique (1) selon l'une des revendications précédentes,
**caractérisée en ce que**
l'unité de commande (17) est conçue pour générer un intervalle de détection de courant (40) et pour détecter le courant pendant l'intervalle de détection de courant (40), et pour modifier, en particulier augmenter ou diminuer, le rapport cyclique (65, 66) de manière à ce que le front (35), en particulier montant ou descendant, coïncide avec un instant initial (38) ou un instant final (39) de l'intervalle de détection de courant (40) ou est situé en dehors de l'intervalle de détection de courant.

6. Machine électrique (1) selon l'une des revendications précédentes,
**caractérisée en ce que**
l'unité de commande (17) comporte un modulateur de largeur d'impulsion (18) qui est conçu pour modifier le rapport cyclique (65, 66) pour au moins une ou plusieurs périodes PWM (64).

7. Procédé de commande d'une machine électrique (1) comprenant au moins deux sous-machines (3, 4), les sous-machines comportant chacune le même nombre de bobines de stator (5, 6, 7, 8, 9, 10) et chaque sous-machine (3, 4) comprenant une partie des bobines du stator (2) et étant conçue pour générer un champ magnétique destiné à faire tourner le rotor (11), des modèles d'impulsions (33, 34), modulées en largeur d'impulsion, étant générés de manière centrée afin de commander les bobines de stator (5, 6, 7, 8, 9, 10), les sous-machines étant commandées de manière déphasée, **caractérisé en ce qu'**un courant circulant à travers au moins une des bobines de stator (5, 6, 7, 8, 9, 10) est détecté dans la plage de temps (40) d'un centre d'impulsion (36) et un rapport cyclique (65, 66) d'une période PWM (64) pour au moins une autre sous-machine (3) est modifié, en particulier allongé ou raccourci, de manière à ce qu'un début d'impulsion et/ou une fin d'impulsion d'une impulsion PWM (61) soit effectué de manière décalée dans le temps par rapport à la détection de courant, notamment au centre d'impulsion (36), le courant étant détecté dans le procédé dans un intervalle de détection de courant (40) qui comprend l'instant du centre d'impulsion (36).

8. Procédé selon la revendication 7, un rapport cyclique (65, 66) dans l'autre sous-machine (4) étant égal à la moitié d'une commande totale de la machine.
